# EUROPÄISCHE PATENTSCHRIFT

(11) **EP 3 126 161 B1**
(45) Veröffentlichungstag und Bekanntmachung des Hinweises auf die Patenterteilung: **11.03.2020**
(21) Anmeldenummer: 15700763.4
(22) Anmeldetag: 23.01.2015
(51) Int. Cl.: B60C 19/12, B60C 19/00

(54) **FAHRZEUGLUFTREIFEN**
PNEUMATIC TYRE FOR A VEHICLE
PNEUMATIQUE DE VÉHICULE

(30) Priorität: 31.03.2014 DE 102014206009
(43) Veröffentlichungstag der Anmeldung: 08.02.2017
(73) Patentinhaber: Continental Reifen Deutschland GmbH, 30165 Hannover (DE)
(72) Erfinder: TYBURSKI, Andreas, 31241 Ilsede (DE); SCHÜRMANN, Oliver, 30853 Langenhagen (DE); SCHWARZ, Michael, 30655 Hannover (DE); GÖNER, Jörg, 31319 Sehnde (DE); GUARDALABENE, Joe, 30163 Hannover (DE)
(74) Vertreter: Finger, Karsten
(86) Internationale Anmeldenummer: PCT/EP2015/051296
(87) Internationale Veröffentlichungsnummer: WO 2015/149959

(56) Entgegenhaltungen:
- EP-A1- 0 029 120
- EP-A1- 2 058 142
- DE-A1-102010 029 455
- JP-A- 2011 020 479
- US-A1- 2003 150 544
- US-A1- 2010 126 647

## Beschreibung

Die Erfindung betrifft einen Fahrzeugluftreifen mit einem in seinem Inneren an der dem Laufstreifen gegenüberliegenden Innenfläche haftend angebrachten, schallabsorbierenden, offenzelligen Schaumstoffring, wobei der Schaumstoffring an einem vorab aufgebrachten, selbsttätig abdichtenden Dichtmittel haftet, welches zumindest unmittelbar nach seinem Aufbringen eine zum Anhaften des Schaumstoffringes erforderliche Klebrigkeit aufweist.

Ein derartiger Fahrzeugluftreifen ist aus der DE 10 2007 028932 A1 bekannt. Der Schaumstoffring reduziert die Luftschwingung im Reifen und führt zu einer Verbesserung des Geräuschverhaltens im Fahrzeug. Der Schaumstoffring besteht aus offenzelligem Schaumstoff und wird auch als "Innenabsorber" bezeichnet. Das an der Reifeninnenseite nach dem Heizvorgang des Reifens nachträglich aufgebrachte Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Jedoch kann das Fließverhalten des Dichtmittels durch den auf dem Dichtmittel aufliegenden Schaumstoffring nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel besonders schwierig.

Aus der JP 2011 20479 A ist es bekannt, an der Innenseite eine Reifen einen schallabsorbierenden, offenzelligen Schaumstoffring unmittelbar anzukleben.

Der Erfindung liegt die Aufgabe zu Grunde, die Abdichtung des Reifens bei Durchstichen zu verbessern.

Gelöst wird die gestellte Aufgabe erfindungsgemäß dadurch, dass zwischen dem schallabsorbierenden Schaumstoffring und dem Dichtmittel ein geschlossenzelliger Schaumstoffring mit luftdichter Wirkung angeordnet ist, welcher eine radiale Dicke von 20 mm bis 50 mm aufweist.

Erfindungsgemäß dichtet der unmittelbar auf dem Dichtmittel aufliegende geschlossenzellige Schaumstoffring bei einem Durchstich luftdicht ab. Durch diese Abdichtung des geschlossenzelligen Schaumstoffringes ist die Dichtwirkung des Reifens bei Durchstichen trotz des in seinem Fließverhalten nachteilig beeinflussten Dichtmittels sichergestellt. In den Bereichen, in denen das Fließverhalten des Dichtmittels nicht durch einen aufliegenden Ring nachteilig beeinflusst ist, dichtet das Dichtmittel nach wie vor zuverlässig ab. Durch die radiale Dicke von 20 mm bis zu 50 mm wird erreicht, dass mindestens 90% aller eindringenden Fremdkörper innerhalb des Materialrings bleiben und die Luftdichtigkeit gewährleistet ist.

Wesentlich ist, dass der geschlossenzellige Schaumstoffring leicht ist, also ein geringes spezifisches Gewicht und eine weitestgehend luftdichte Wirkung aufweist.

Zweckmäßig ist es, wenn der geschlossenzellige Schaumstoffring und der offenzellige Schaumstoffring mittels eines Klebemittels miteinander verklebt sind. Damit ist eine definierte Position des geschlossenzelligen Schaumstoffringes gewährleistet. Das Materialpaket aus geschlossen- und offenzelligem Schaumstoff kann so in einem Arbeitsschritt montiert werden.

Zweckmäßig ist es, wenn der geschlossenzellige Schaumstoffring eine maximale radiale Dicke von ≤ 40 mm aufweist.

Vorteilhaft ist es, wenn der offenzellige Schaumstoffring eine radiale Dicke von <60 mm, vorzugsweise eine radiale Dicke von 10 mm bis 40 mm, aufweist. Dadurch wird ein optimales Verhältnis aus Materialmenge und damit Kosten zu Geräuschabsorptionsverhalten erzielt.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der Schaumstoffring angepresst und derart haftend mit dem Dichtmittel verbunden werden kann. Es eignen sich daher beispielsweise Dichtmittel auf Basis von Polyurethan oder Dichtmittel, welche eines viskose Mischung auf Basis eines Butylkautschukes, eines Polybutens oder auf Basis von Silikon sind.

In einer Ausführung der Erfindung liegt der geschlossenzellige Schaumstoffring mit seiner radial äußeren Oberfläche vollflächig auf dem Dichtmittel auf und grenzt zudem unmittelbar mit seiner radial inneren Oberfläche vollflächig an den offenzelligen Schaumstoffring, wobei die Breite des geschlossenzelligen Schaumstoffringes vorzugsweise etwa der Breite des offenzelligen Schaumstoffringes entspricht.

In einer anderen Ausführung der Erfindung ist der geschlossenzellige Schaumstoffring unterteilt und grenzt mit seiner radial inneren Oberfläche vollflächig an den offenzelligen Schaumstoffring. Die Abstützung auf dem Dichtmittel erfolgt mittels 2 oder mehr Stützen.

Vorteilhaft ist es, wenn die Schichtdicke des Dichtmittels in denjenigen Bereichen, in denen der geschlossenzellige Schaumstoffring unmittelbar auf dem Dichtmittel aufliegt, ≤ 2 mm, vorzugsweise ≤ 1 mm beträgt, während die Schichtdicke des Dichtmittels in denjenigen Bereichen, in denen der geschlossenzellige Materialring nicht unmittelbar auf dem Dichtmittel aufliegt, zwischen 2 mm und 8 mm, vorzugsweise <5 mm beträgt. In denjenigen Bereichen, in denen der geschlossenzellige Materialring auf dem Dichtmittel aufliegt, kann dieses in seiner Dicke reduziert werden, was sich vorteilhaft auf die Gestehungskosten des Reifens auswirkt. In denjenigen Bereichen, in denen kein Materialring auf dem Dichtmittel aufliegt, ist das Fließverhalten des viskosen Dichtmittels unbeeinflusst und dichtet in seiner üblichen Dicke vorzugsweise von <5 mm zuverlässig bei Durchstichen ab.

Zweckmäßig ist es, wenn die Stützen in Reifenumfangsrichtung, quer zur Reifenumfangsrichtung oder winklig dazu, durchgängig oder unterbrochen, angeordnet sind. Dadurch wird die Steifigkeit in Umfangsrichtung bzw. quer dazu erhöht.

Weitere Merkmale, Vorteile und Einzelheiten der Erfindung werden nun anhand der Zeichnungen, die neben einem Ausführungsbeispiel des Standes der Technik ein schematisches erfindungsgemäßes Ausführungsbeispiele darstellen, näher beschrieben. Dabei zeigen die:
Fig. 1 einen Querschnitt durch einen Fahrzeugluftreifen des Standes der Technik;
Fig. 2 einen Querschnitt durch die Innenschicht und die radial innen in Bezug auf die Innenschicht angeordneten Bauteile eines erfindungsgemäßen Fahrzeugluftreifens;
Fig. 3 einen Ausschnitt durch den Querschnitt der Fig. 2 mit eingedrungenem Fremdkörper;
Fig. 4 einen Ausschnitt durch den Querschnitt der Fig. 2 mit einem Luftkanal, der durch einen eingedrungenen, jedoch wieder ausgeworfenen Fremdkörper erzeugt ist.

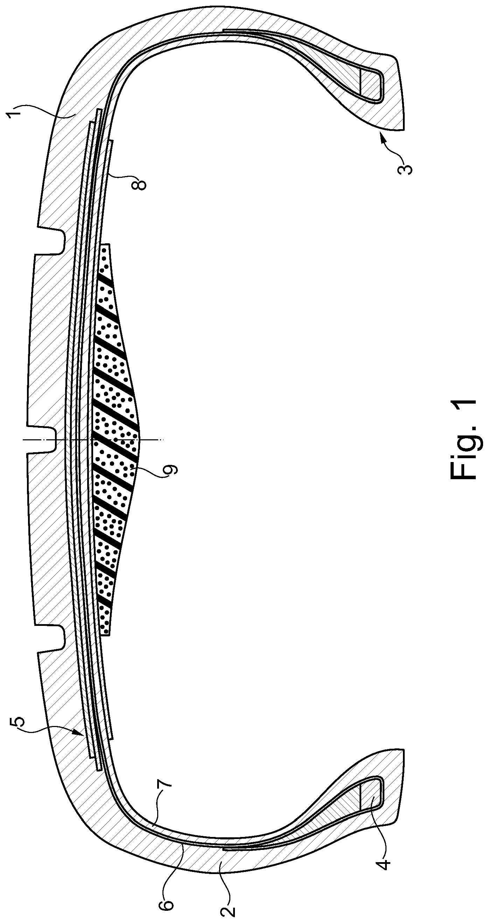

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein Dichtmittel 8 aufgebracht, welches in der Lage ist, sich bei Durchstich - Beschädigung des Reifens - selbstabdichtend zu verhalten. Am Dichtmittel 8 haftet ein schallabsorbierender Schaumstoffring 9, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der schallabsorbierende Schaumstoffring 9 ist bezüglich seiner schallabsorbierenden Eigenschaften auf die Reifenhohlraumfrequenz abgestimmt. Der Schaumstoffring 9 weist beispielsweise hier einen etwa langgestreckt dreieckförmigen, bezüglich des Reifensäquators symmetrischen Querschnitt auf. Der Schaumstoff des Schaumstoffringes 9 ist ein offenzelliger Schaumstoff, da dieser am besten dazu geeignet ist, Schall zu absorbieren. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 2 mm und 8 mm beträgt. Zumindest unmittelbar nach dem Aufbringen soll das Dichtmittel relativ flüssig und klebrig sein. Zu diesem Zeitpunkt wird der vorgefertigte Schaumstoffring 9 in das Innere des Reifens eingebracht und angedrückt. Nach dem Ausreagieren haftet der Schaumstoffring 9 an dem elastisch deformierbaren, aber weitestgehend ortsfest verbleibenden Dichtmittel 8.

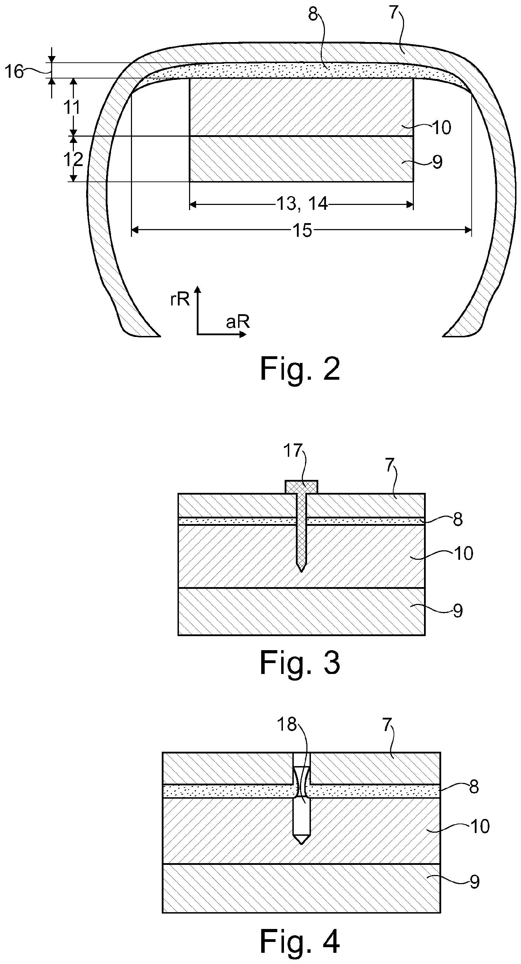

Die Fig. 2 zeigt einen Querschnitt durch die Innenschicht 7 und die radial innen in Bezug auf die Innenschicht angeordneten Bauteile 8, 9, 10 eines erfindungsgemäßen Fahrzeugluftreifens. Der erfindungsgemäße Fahrzeugluftreifen unterscheidet sich insbesondere von dem Fahrzeugluftreifen des Standes der Technik der Fig. 1 darin, dass zwischen dem schallabsorbierenden offenzelligen Schaumstoffring 9 und dem Dichtmittel 8 ein geschlossenzelliger Schaumstoffring 10, mit luftdichter Wirkung angeordnet ist.
Der geschlossenzellige Schaumstoffring 10 und der offenzellige Schaumstoffring 9 sind mittels eines Klebemittels miteinander verklebt und weisen jeweils einen etwa rechteckigen Querschnitt auf. Der geschlossenzellige Schaumstoffring 10 liegt mit seiner radial äußeren Oberfläche vollflächig auf dem Dichtmittel 8 auf und grenzt mit seiner radial inneren Oberfläche vollflächig an den offenzelligen Schaumstoffring 9 an. Die Breite 13 des geschlossenzelligen Schaumstoffringes 10 ist gleich der Breite 14 des offenzelligen Schaumstoffringes 9. Das Dichtmittel 8 weist eine größere Breite 15 als der Schaumstoffring 9 auf. Der geschlossenzellige Schaumstoffring 10 weist eine Dicke 11 von etwa 30 mm auf, gemessen in radialer Richtung (rR). Der offenzellige Schaumstoffring 9 weist eine Dicke 12 von etwa 20 mm auf, gemessen in radialer Richtung (rR). Das Dichtmittel 8 ist ein Polyurethan-Gel. Das Dichtmittel 8 weist eine Dicke von <5 mm auf.

Die Fig. 3 zeigt einen Ausschnitt durch den Querschnitt der Fig. 2 mit eingedrungenem Fremdkörper, während die Fig. 4 einen Ausschnitt durch den Querschnitt der Fig. 2 mit einem Luftkanal 18 zeigt, der durch einen eingedrungenen, jedoch wieder ausgeworfenen Fremdkörper 17 erzeugt ist. Erfindungsgemäß dichtet der unmittelbar auf dem Dichtmittel 8 aufliegende geschlossenzellige Schaumstoffring 10 bei einem Durchstich luftdicht ab. Durch diese Abdichtung durch den geschlossenzelligen Schaumstoffring 10 ist die Dichtwirkung des Reifens bei Durchstichen und verbleibenden Luftkanälen 18 trotz des in seinem Fließverhalten nachteilig beeinflussten Dichtmitteles 8 sichergestellt.

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Dichtmittellage
- 9: schallabsorbierender offenzelliger Schaumstoffring
- 10: geschlossenzelliger Schaumstoffring
- 11: Dicke des geschlossenzelligen Schaumstoffringes
- 12: Dicke des offenzelligen Schaumstoffringes
- 13: Breite des geschlossenzelligen Schaumstoffringes
- 14: Breite des offenzelligen Schaumstoffringes
- 15: Breite der Dichtmittellage
- 16: Dicke der Dichtmittellage
- 17: Fremdkörper
- 18: Luftkanal

## Patentansprüche

1. Fahrzeugluftreifen mit einem in seinem Inneren an der dem Laufstreifen (1) gegenüberliegenden Innenfläche haftend angebrachten schallabsorbierenden, offenzelligen Schaumstoffring (9), wobei der Schaumstoffring (9) an einem vorab aufgebrachten, selbsttätig abdichtenden Dichtmittel (8) haftet, welches zumindest unmittelbar nach seinem Aufbringen eine zum Anhaften des Schaumstoffringes (9) erforderliche Klebrigkeit aufweist, **dadurch gekennzeichnet, dass** zwischen dem schallabsorbierenden Schaumstoffring (9) und dem Dichtmittel (8) ein geschlossenzelliger Schaumstoffring (10) mit luftdichter Wirkung angeordnet ist, welcher eine radiale Dicke (11) von 20 mm bis 50 mm aufweist.

2. Fahrzeugluftreifen nach Anspruch 1, **dadurch gekennzeichnet, dass** der geschlossenzellige Schaumstoffring (10) und der offenzellige Schaumstoffring (9) mittels eines Klebemittels miteinander verklebt sind.

3. Fahrzeugluftreifen nach einem oder mehreren der vorangehenden Ansprüche, **dadurch gekennzeichnet, dass** der geschlossenzellige Schaumstoffring (10) eine maximale radiale Dicke (11) von ≤ 40 mm aufweist.

4. Fahrzeugluftreifen nach einem oder mehreren der vorangehenden Ansprüche, **dadurch gekennzeichnet, dass** der offenzellige Schaumstoffring (9) eine radiale Dicke (12) von ≥ 10 mm, vorzugsweise eine Dicke (12) von 20 mm bis 40 mm aufweist.

5. Fahrzeugluftreifen nach einem oder mehreren der vorangehenden Ansprüche, **dadurch gekennzeichnet, dass** das Dichtmittel (8) ein Polyurethan-Gel ist.

6. Fahrzeugluftreifen nach einem oder mehreren der vorangehenden Ansprüche 1 - 5, **dadurch gekennzeichnet, dass** das Dichtmittel (8) eine viskose Mischung auf Basis eines Butylkautschukes, eines Polybutens oder auf Basis von Silikon ist.

7. Fahrzeugluftreifen nach einem oder mehreren der vorangehenden Ansprüche, **dadurch gekennzeichnet, dass** der geschlossenzellige Schaumstoffring (10) mit seiner radial äußeren Oberfläche vollflächig auf dem Dichtmittel (8) aufliegt und mit seiner radial inneren Oberfläche vollflächig an den offenzelligen Schaumstoffring (9) angrenzt, wobei die Breite (13) des geschlossenzelligen Schaumstoffringes (10) vorzugsweise etwa der Breite (15) des offenzelligen Schaumstoffringes entspricht.

8. Fahrzeugluftreifen nach einem oder mehreren der vorangehenden Ansprüche 1 bis 7, **dadurch gekennzeichnet, dass** der geschlossenzellige und unterteilte Schaumstoffring (10) mit seiner radial inneren Oberfläche vollflächig an den offenzelligen Schaumstoffring (9) angrenzt und sich der offenzellige Schaumstoffring (9) samt geschlossenzelligem Schaumstoffring (10) auf dem Dichtmittel (8) mittels zwei oder mehr Stützen abstützt.

9. Fahrzeugluftreifen nach Anspruch 8, **dadurch gekennzeichnet, dass** die Stützen in Reifenumfangsrichtung, quer zur Reifenumfangsrichtung oder unter einem Winkel, durchgängig oder unterbrochen, angeordnet sind.

10. Fahrzeugluftreifen nach einem der Ansprüche 1 bis 9, **dadurch gekennzeichnet, dass** die Dicke (16) der Dichtmittellage (8) in denjenigen Bereichen, in denen der geschlossenzellige Schaumstoffring (10) unmittelbar auf dem Dichtmittel (8) aufliegt, ≤ 2 mm, vorzugsweise ≤ 1 mm ist, während die Schichtdicke (16) des Dichtmittels (8) in denjenigen Bereichen, in denen der geschlossenzellige Schaumstoffring (10) nicht unmittelbar auf dem Dichtmittel (8) aufliegt, zwischen 2 mm und 6 mm, vorzugsweise <5 mm beträgt.

## Claims

1. Pneumatic vehicle tire with a sound-absorbing open-cell foam ring (9) inside it, adhesively attached to the inner surface opposite from the tread (1), the foam ring (9) adhering to a previously applied, self-sealing sealant (8), which at least immediately after its application has a tackiness required for the adhesive attachment of the foam ring (9), **characterized in that** a closed-cell foam ring (10) with an airtight effect, which has a radial thickness (11) of 20 mm to 50 mm, is arranged between the sound-absorbing foam ring (9) and the sealant (8) .

2. Pneumatic vehicle tire according to Claim 1, **characterized in that** the closed-cell foam ring (10) and the open-cell foam ring (9) are bonded to one another by means of an adhesive.

3. Pneumatic vehicle tire according to one or more of the preceding claims, **characterized in that** the closed-cell foam ring (10) has a maximum radial thickness (11) of ≤ 40 mm.

4. Pneumatic vehicle tire according to one or more of the preceding claims, **characterized in that** the open-cell foam ring (9) has a radial thickness (12) of ≥ 10 mm, preferably a thickness (12) of 20 mm to 40 mm.

5. Pneumatic vehicle tire according to one or more of the preceding claims, **characterized in that** the sealant (8) is a polyurethane gel.

6. Pneumatic vehicle tire according to one or more of the preceding Claims 1 - 5, **characterized in that** the sealant (8) is a viscous mixture based on butyl rubber, a polybutene or based on silicone.

7. Pneumatic vehicle tire according to one or more of the preceding claims, **characterized in that** the closed-cell foam ring (10) lies with its radially outer surface fully flush on the sealant (8) and lies with its radially inner surface fully flush up against the open-cell foam ring (9), the width (13) of the closed-cell foam ring (10) preferably corresponding approximately to the width (15) of the open-cell foam ring.

8. Pneumatic vehicle tire according to one or more of the preceding Claims 1 to 7, **characterized in that** the closed-cell, divided foam ring (10) lies with its radially inner surface fully flush up against the open-cell foam ring (9) and the open-cell foam ring (9) is supported together with the closed-cell foam ring (10) on the sealant (8) by means of two or more supports.

9. Pneumatic vehicle tire according to Claim 8, **characterized in that** the supports are arranged in the circumferential direction of the tire, transversely to the circumferential direction of the tire or at an angle, continuously or discontinuously.

10. Pneumatic vehicle tire according to one of Claims 1 to 9, **characterized in that** the thickness (16) of the sealant ply (8) in those regions in which the closed-cell foam ring (10) lies directly on the sealant (8) is ≤ 2 mm, preferably ≤ 1 mm, while the layer thickness (16) of the sealant (8) in those regions in which the closed-cell foam ring (10) does not lie directly on the sealant (8) is between 2 mm and 6 mm, preferably < 5 mm.

## Revendications

1. Pneumatique de véhicule automobile comprenant un anneau de matière alvéolaire (9) à cellules ouvertes absorbant le son et monté à l'intérieur de manière adhésive à la surface intérieure opposée à la bande de roulement (1), l'anneau de matière alvéolaire (9) adhérant à un agent d'étanchéité auto-scellant (8) préalablement appliqué et présentant, lequel présente au moins immédiatement après son application, une adhésivité requise à l'adhérence de l'anneau de matière alvéolaire (9), **caractérisé en ce qu'**un anneau de matière alvéolaire (10) à cellules fermées, qui présente une étanchéité à l'air et qui a une épaisseur radiale (11) de 20 mm à 50 mm, est disposé entre l'anneau de matière alvéolaire (9) absorbant le son et l'agent d'étanchéité (8).

2. Pneumatique de véhicule automobile selon la revendication 1, **caractérisé en ce que** l'anneau de matière alvéolaire (10) à cellules fermées et l'anneau de matière alvéolaire (9) à cellules ouvertes sont collés ensemble au moyen d'un adhésif.

3. Pneumatique de véhicule automobile selon l'une au moins des revendications précédentes, **caractérisé en ce que** l'anneau de matière alvéolaire (10) à cellules fermées a une épaisseur radiale maximale (11) ≤ 40 mm.

4. Pneumatique de véhicule automobile selon l'une au moins des revendications précédentes, **caractérisé en ce que** l'anneau de matière alvéolaire (9) à cellules ouvertes a une épaisseur radiale (12) ≥ 10 mm, de préférence une épaisseur (12) de 20 mm à 40 mm.

5. Pneumatique de véhicule automobile selon l'une au moins des revendications précédentes, **caractérisé en ce que** l'agent d'étanchéité (8) est un gel de polyuréthane.

6. Pneumatique pour véhicule automobile selon l'une au moins des revendications précédentes 1 à 5, **caractérisé en ce que** l'agent d'étanchéité (8) est un mélange visqueux à base de caoutchouc butyle, d'un polybutène ou à base de silicone.

7. Pneumatique de véhicule selon l'une au moins des revendications précédentes, **caractérisé en ce que** l'anneau de matière alvéolaire (10) à cellules fermées vient en appui avec sa surface radialement extérieure sur toute la surface de l'agent d'étanchéité (8) et est adjacente avec sa surface radialement intérieure sur toute la surface à l'anneau de matière alvéolaire (9) à cellules ouvertes, la largeur (13) de l'anneau de matière alvéolaire (10) à cellules fermées correspondant de préférence à peu près à la largeur (15) de l'anneau de matière alvéolaire à cellules ouvertes.

8. Pneumatique de véhicule automobile selon l'une au moins des revendications précédentes 1 à 7, **caractérisé en ce que** l'anneau de matière alvéolaire (10) à cellules fermées et divisé est adjacent avec sa surface radialement intérieure sur toute la surface à l'anneau de matière alvéolaire (9) à cellules ouvertes et l'anneau de matière alvéolaire (9) à cellules ouvertes, conjointement avec l'anneau de matière alvéolaire (10) à cellules fermées, s'appuie sur l'agent d'étanchéité (8) au moyen d'au moins deux supports.

9. Pneumatique de véhicule pneumatique selon la revendication 8, **caractérisé en ce que** les supports sont disposés dans la direction circonférentielle du pneumatique, transversalement à la direction circonférentielle du pneumatique ou angulairement, de manière continue ou discontinue.

10. Pneumatique de véhicule automobile selon l'une des revendications 1 à 9, **caractérisé en ce que** l'épaisseur (16) de la couche d'agent d'étanchéité (8) dans les régions dans lesquelles l'anneau de matière alvéolaire (10) à cellules fermées vient en appui directement sur l'agent d'étanchéité (8), est ≤ 2 mm, de préférence ≤ 1 mm, tandis que l'épaisseur de couche (16) de l'agent d'étanchéité (8) dans les régions dans lesquelles l'anneau de matière alvéolaire (10) à cellules fermées ne vient pas en appui directement sur l'agent d'étanchéité (8), est comprise entre 2 mm et 6 mm, de préférence < 5 mm.
